Europäisches Patentamt

**European Patent Office**

Office européen des brevets

(11) Veröffentlichungsnummer: **0 045 942**
**B1**

(12) **EUROPÄISCHE PATENTSCHRIFT**

(45) Veröffentlichungstag der Patentschrift:
04.12.85

(21) Anmeldenummer: 81106141.5

(22) Anmeldetag: 05.08.81

(51) Int. Cl.⁴: **G 01 B 17/00**

(54) Anordnung zur Feststellung von Werkzeugverschleiss.

(30) Priorität: 07.08.80 DE 3029957

(43) Veröffentlichungstag der Anmeldung:
17.02.82 Patentblatt 82/7

(45) Bekanntmachung des Hinweises auf die Patenterteilung:
04.12.85 Patentblatt 85/49

(84) Benannte Vertragsstaaten:
AT BE CH FR GB IT LI NL SE

(56) Entgegenhaltungen:
DE - A - 2 557 428
GB - A - 2 022 262
US - A - 3 043 132
US - A - 3 516 285
US - A - 3 728 621

Patents Abstracts of Japan, Band 4, Nr. 118, 22. August
1980 Seite 21 P 24
Patents Abstracts of Japan, Band 4, Nr. 86, 20 Juni 1980
Seite 99 P 16

(73) Patentinhaber: **Siemens Aktiengesellschaft, Berlin und
München Wittelsbacherplatz 2, D-8000 München 2 (DE)**

(72) Erfinder: **Drew, Jeffrey-Michael, B.Sc.Dipl.M.A.,
Stockmannstrasse 38, D-8000 München 71 (DE)**
Erfinder: **Seitz, Max-Gerhard, Dipl.-Ing.,
Autharistrasse 36, D-8000 München 90 (DE)**
Erfinder: **Kehrer, Hans-Peter, Dr., Dipl.-Ing.,
Lannerstrasse 25, D-8025 Unterhaching (DE)**
Erfinder: **Eichelbrönner, Gottfried, Dipl.-Phys.,
Burgfrauenstrasse 107A, D-1000 Berlin 28 (DE)**

BUNDESDRUCKEREI BERLIN

**Beschreibung**

Die Erfindung betrifft eine Vorrichtung zum Feststellen des Verschleißes an Schneidwerkzeugen unter Auswertung der am Schneidwerkzeug auftretenden Schwingungen, die in elektrische Signale umgewandelt werden, welche mittels einer Triggerschaltung zu einem bestimmten, vom Schneidvorgang abhängigen Zeitpunkt einer Auswerteschaltung zugeführt werden, die die Signalamplitude mit einem Sollwert vergleicht und bei Überschreiten des Sollwertes ein Steuersignal erzeugt.

Durch die DE-A-25 57 428 ist eine Vorrichtung zum Feststellen von Beschädigungen und unzulässigen Abnutzungen an spanabhebenden Schneidwerkzeugen bekanntgeworden. Hierbei werden die am Werkstück-Tisch oder am Werkzeugträger einer Werkzeugmaschine auftretenden Schwingungen mit Hilfe eines piezoelektrischen Elementes erfaßt und in entsprechende elektrische Signale umgewandelt. Diese elektrischen Signale werden über eine Mittelwertschaltung einer Differenz- und Vergleichsschaltung zugeführt, mit der die beim Einsetzen des Schneidvorganges erzeugten Signale mit einem vorgebbaren Sollwert verglichen werden. Sobald dieser Sollwert überschritten wird, wird die Werkzeugmaschine augenblicklich stillgesetzt, um Ausschuß zu verhindern.

Eine solche Vorrichtung ist jedoch nicht brauchbar, wenn außer den Schneidgeräuschen auch noch andere Geräusche, wie z. B. Reibgeräusche, auftreten, wie sie beispielsweise bei Schneidwerkzeugen mit zwei sich aneinander vorbeibewegenden Schneiden in aller Regel auftreten. Ein typisches Beispiel dafür ist das Schneiden von Wolframdrähten und wird daher in diesem Zusammenhang näher erläutert.

Wolframdrähte werden beispielsweise als Wendel bei der Glühlampenherstellung verwendet. Da die Wolframdrahtwendel meist in fortlaufender Folge auf einen Kern gewickelt hergestellt werden, müssen sie entsprechend dem Verwendungszweck auf ein bestimmtes Maß abgelängt werden; bei Wendeln, die mit Unterbrechung gewickelt werden, erfolgt die Trennung in der Mitte der Unterbrechung. Das Ablängen erfolgt hierbei mit Hilfe eines feststehenden Düsenmessers und einem Schneidemesser, welches senkrecht zum Gewendel hin- und herbewegt wird. Hierbei treten sowohl beim Schneiden mit stumpfen als auch beim Schneiden mit scharfen Schneidwerkzeugen außer den Schneidgeräuschen auch starke Reibgeräusche zwischen dem Schneidwerkzeug und dem Düsenmesser auf, die sich mit der bekannten Vorrichtung nicht eliminieren lassen.

Bei der Ablängung der Glühlampenwendel tritt mit zunehmender Abnutzung der Schneidwerkzeuge an der Wendel eine mehr oder weniger starke Häkchenbildung auf. Derartige Häkchen an den Wendeln führen zur gegenseitigen Verhakung der Wendeln und stören dann den automatischen Ablauf in der Lampenfertigung und verursachen außerdem Ausschuß, der in der Größenordnung von zwei Prozent der Herstellungsquote liegt. Ein besonderes Problem liegt hierbei darin, daß der die Häkchenbildung hervorrufende Werkzeugverschleiß nicht voraussehbar ist, da dieser sehr starken Schwankungen unterworfen ist. Die Erfahrung hat gezeigt, daß die tatsächliche Schnittzahl, das ist die Anzahl der Schnitte, die ohne Nachschleifen der Werkzeuge durchführbar ist, zwischen 10 000 bis 30 000 Schnitten liegt. Diese Schwankung der Schnittzahl ist u. a. auf Unterschiede in der Festigkeit des Wolframdrahtes zurückzuführen. Aus diesem Grund müssen bisher die Werkzeuge ständig kontrolliert werden, was dadurch erfolgt, daß alle fünf bis zehn Minuten Stichproben der geschnittenen Wendel unter einer Lupe auf Häkchenbildung untersucht werden. Dieses Kontrollverfahren ist sehr personalintensiv und erfordert sehr zuverlässiges Personal.

Der Erfindung liegt daher die Aufgabe zugrunde, eine Vorrichtung zu schaffen, um den Werkzeugverschleiß beim Einsatz von Schneidwerkzeugen mit zwei sich aneinander vorbeibewegenden Schneiden automatisch so früh feststellen zu können, daß der Ausschuß möglichst gering gehalten werden kann und keine Störungen im Fertigungsablauf auftreten können.

Diese Aufgabe wird mit der Vorrichtung gemäß der Erfindung dadurch gelöst, daß bei Schneidwerkzeugen mit zwei sich aneinander vorbeibewegenden Schneiden die Triggerschaltung derart ausgebildet ist, daß die Schwingungen, die überwiegend nur Schallemissionssignale des Schneidvorganges enthalten, ausgewertet werden.

Hierbei wird von der Tatsache Gebrauch gemacht, daß bei plastischer Verformung bzw. Rißbildung vieler metallischer Werkstoffe Schall emittiert wird. Die Schwierigkeit liegt hierbei jedoch darin, daß sowohl bei Schneidwerkzeugen mit stumpfen Schneiden als auch bei Schneidwerkzeugen mit scharfen Schneiden starke Reibgeräusche zwischen den sich aneinander vorbeibewegenden Schneiden auftreten. Dieses Problem kann auf einfache Weise dadurch gelöst werden, daß die Triggerschaltung derart ausgebildet ist, daß Schwingungen, die überwiegend nur Schallemissionssignale des Schneidvorganges enthalten, ausgewertet werden. Dieses durch die Triggerschaltung ausgewählte Fenster kann beispielsweise durch eine Analyse der Schallemissionssignale festgestellt werden. So hat sich gezeigt, daß ca. 500 µs vor Anfang der Reibgeräusche Schallemissionssignale des Schneidevorgangs auftreten, die mit Hilfe eines Trigger-Fensters ausgeblendet und ausgewertet werden können. Es hat sich gezeigt, daß beispielsweise ein Düsenmesser als idealer Wellenleiter wirkt, so daß der Schallaufnehmer direkt am Düsenmesser angekoppelt werden kann.

Bevorzugte Ausgestaltungen der erfindungsgemäßen Vorrichtung gehen aus den Unteransprüchen 2 und 3 hervor.

Anhand der Zeichnung wird die erfindungsgemäße Vorrichtung näher erläutert. Es zeigt

Figur 1 einen Teil einer abgelängten Wendel mit Häkchen,

Figur 2 eine Vorrichtung gemäß der Erfindung,

Figur 3 eine graphische Darstellung der Schallemissionssignale der Reibgeräusche beim Schneidvorgang ohne Wendel,

Figur 4 eine graphische Darstellung der Schallemissionssignale der Schneid- und Reibgeräusche bei einem Schnitt mit scharfen Schneidwerkzeugen,

Figur 5 eine graphische Darstellung der Schallemissionssignale der Schneid- und Reibgeräusche bei einem Schnitt mit stumpfen Schneidwerkzeugen und

Figur 6 eine graphische Darstellung der Schallemissionssignale bei einer Anordnung nach Figur 2.

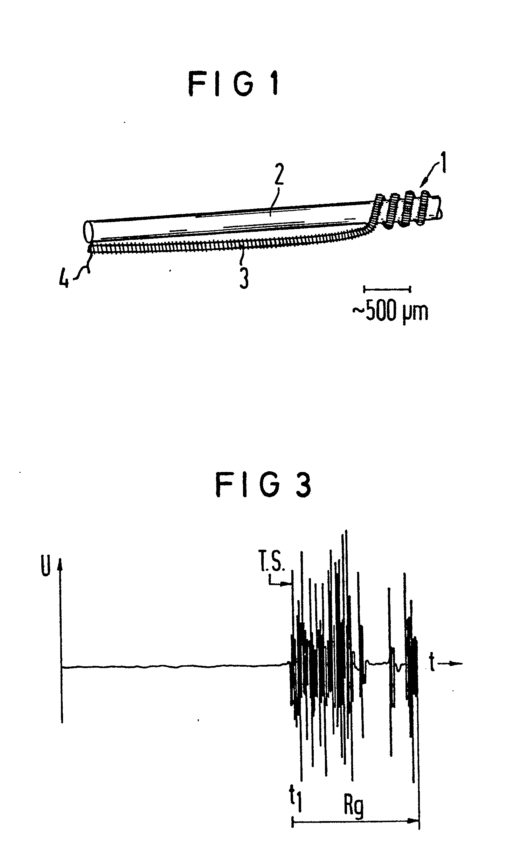

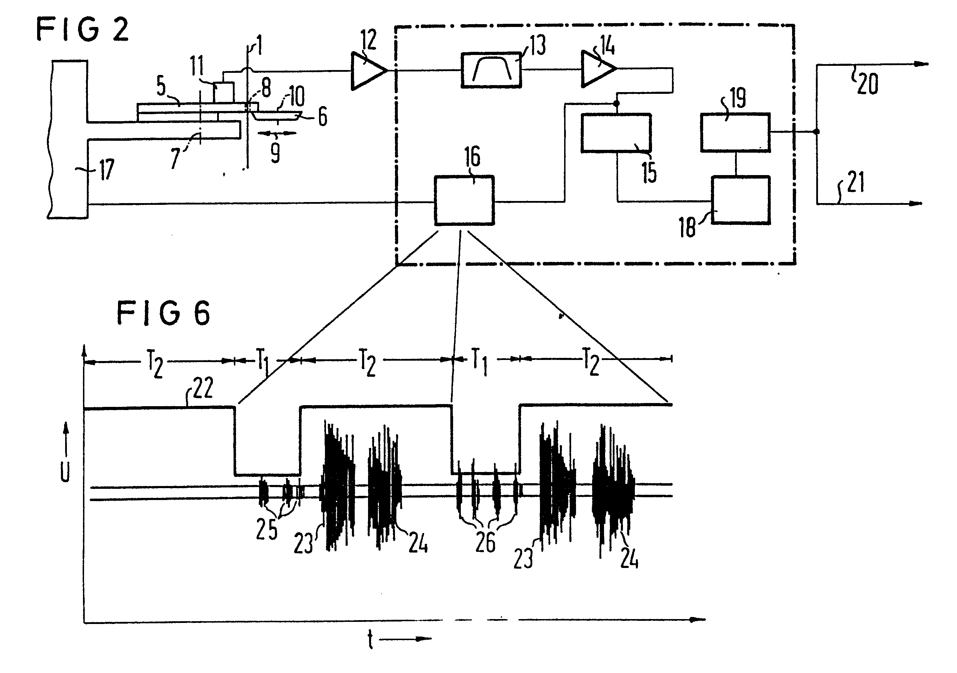

Figur 1 zeigt eine Glühlampenwendel 1, die aus Herstellungsgründen um einen metallischen Kern 2 gewickelt ist. Der vordere Teil 3 der Wendel ist als Teil einer Unterbrechung dargestellt, wobei am vorderen Ende ein Häkchen 4 ausgebildet ist, welches durch die stumpfen Schneidwerkzeuge hervorgerufen ist. Diese Häkchen 4 sind sehr störend, da sie sich in anderen Wendeln haken können. Um diese Häkchenbildung frühzeitig erkennen zu können, ist in Figur 2 ein Ausführungsbeispiel einer Anordnung zur Erfassung der Schallemissionssignale dargestellt.

In Figur 2 ist mit 1 wiederum eine Glühlampenwendel dargestellt, die mit Hilfe eines Düsenmessers 5 und eines Schneidwerkzeuges 6 in entsprechende Stücke geschnitten werden soll. Das Düsenmesser 5 ist scheibenförmig ausgebildet und weist konzentrisch zur Achse 7 am Umfang Bohrungen 8 mit scharfen Schneidkanten auf. Die Bohrungen 8 sind dem Durchmesser der Wendel 1 angepaßt. Das Düsenmesser 5 kann um die Achse 7 verstellt werden, um die nächste Bohrung 8 zur Wirkung zu bringen, falls die Schneidkante an dem Bohrungsrand stumpf geworden ist.

Das Schneidwerkzeug 6 ist ebenfalls als Scheibe ausgebildet und in Pfeilrichtung 9 hin und her bewegbar, wobei die Schneidkante des Schneidwerkzeuges 6 leicht gegen das Düsenmesser 5 angestellt ist, um einen glatten Schnitt zu erhalten. Sobald die Schneidkante des Schneidwerkzeuges 6 stumpf geworden ist, kann durch Drehen des Schneidwerkzeuges 6 um eine Achse 10 um einen bestimmten Winkel ein neuer Bereich des Schneidwerkzeuges 6 zur Wirkung gebracht werden.

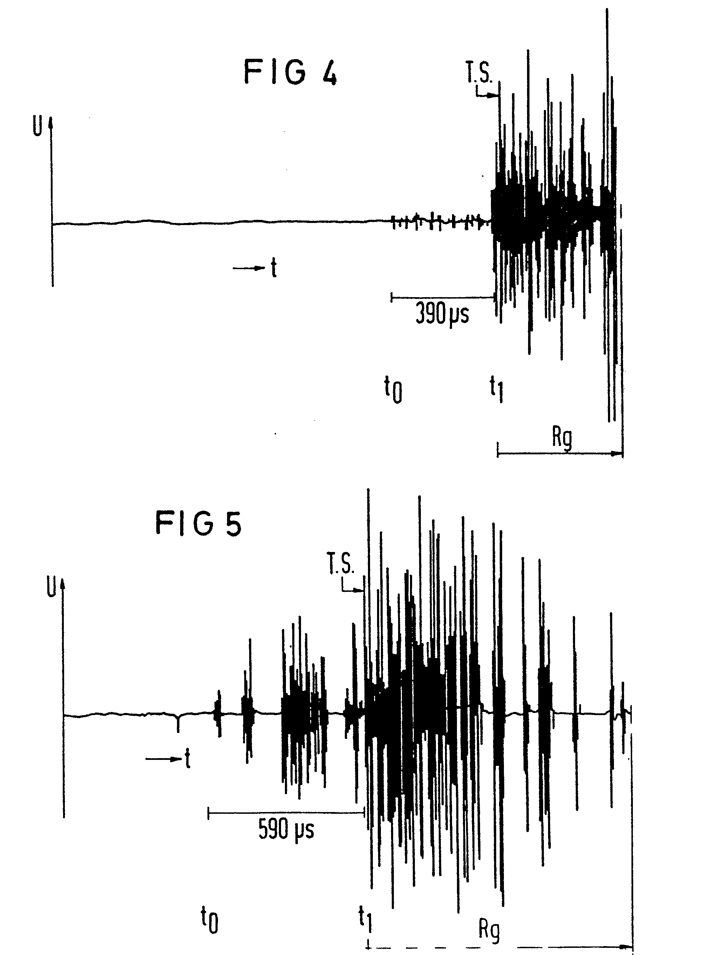

Mit dem Düsenmesser 5 ist ein Schallaufnehmer 11 gekoppelt, der die Schallemissionssignale aufnimmt und über einen Vorverstärker 12, ein Filter 13 und einen Hauptverstärker 14 einen Signal-Analysator 15 zuführt, welcher die Schallemissionssignale aufzeichnet. Mit Hilfe eines Fenster-Triggers 16 wird der Bereich aus den Schallemissionssignalen ausgeblendet, in dem nur Schneidgeräusche auftreten. Der Fenster-Trigger 16 erhält sein Signal über eine Leitung, die mit einem Teil 17 der Schneidvorrichtung verbunden ist, um anzudeuten, daß bei dem gewählten Ausführungsbeispiel das Triggersignal extern, d. h. in Abhängigkeit von der Bewegung des Schneidwerkzeuges 6, ausgelöst wird. Der Fenster-Trigger 16 kann aber auch durch ein internes Signal getriggert werden. Beispielsweise in Abhängigkeit vom Beginn der Reibgeräusche, wie anhand der Figur 4 und 5 noch näher erläutert werden wird. Der Signal-Analysator 15 ist über einen Zähler 18 mit einem Komparator 19 verbunden, der beispielsweise die Amplitude und/oder Dauer der Schallemissionssignale mit einem noch zulässigen Wert vergleicht. Über Ausgänge 20 und 21 können Signale abgegeben werden, die anzeigen, ob die Werkzeuge noch gut oder bereits schlecht sind.

Figur 3 zeigt in Abhängigkeit von der Zeit die Amplituden der Schallemissionssignale, die bei einer relativen Bewegung zwischen Düsenmesser und Schneidwerkzeug entstehen, ohne daß eine Wendel geschnitten wird. Ab einem Zeitpunkt t1 entstehen Reibgeräusche, wie durch einen Pfeil Rg angedeutet ist.

Figur 4 zeigt eine graphische Darstellung der Schallemissionssignale in Abhängigkeit von der Zeit, wobei eine Wendel geschnitten wird. Wie aus Figur 4 ersichtlich ist, treten 390 µs vor dem Auftreten der Reibgeräusche Rg Schneidgeräusche auf. Diese Schneidgeräusche sind jedoch so gering, daß praktisch noch keine Häkchenbildung auftreten kann.

Hingegen zeigt Figur 5 eine graphische Darstellung der Schallemissionssignale, wobei bereits 590 µs vor dem Zeitpunkt t1 Schneidgeräusche auftreten, die eine solche Amplitude aufweisen, daß vermutet werden kann, daß die Schneidwerkzeuge stumpf geworden sind. Der Bereich t0 bis t1 kann also für die Überwachung des Schneidvorgangs herangezogen werden. Dieser Bereich kann beispielsweise mit Hilfe eines Triggersignals T.S erfaßt werden, welches das Auftreten der Reibgeräusche zwischen Düsenmesser und Schneidwerkzeug anzeigt.

Figur 6 zeigt eine graphische Darstellung der Schallemissionssignale, wie sie beim Schneidvorgang auftreten. Mit 22 ist die Schwellspannung des Fenster-Triggers 16 bezeichnet. Mit 23 und 24 sind die Reibgeräusche zwischen Schneidwerkzeug 6 und Düsenmesser 5 und mit 25 und 26 Schneidgeräusche bezeichnet. Mit Hilfe des Fenster-Triggers 16 werden die Bereiche T1 ausgeblendet und dem Signal-Analysator 15 zugeführt, in denen mit dem Auftreten der reinen Schneidgeräusche zu rechnen ist. Hierbei sind die Reibgeräusche 23 der Hin- und die Reibgeräusche 24 der Rückbewegung des Schneidwerkzeugs 6 zugeordnet. Vor den Reibgeräuschen 23 liegen die Schneidgeräusche 25, die bei dem gewählten Ausführungsbeispiel jedoch unterhalb der Schwelle des Triggers 16 liegen.

Hingegen sind die Schallemissionssignale 26 in einer Größenordnung, daß sie die Schwelle des Triggers 16 übersteigen. Daher wird in diesem Fall Signal auf die Leitung 21 gegeben, wodurch angekündigt wird, daß die Schneidwerkzeuge unzulässig stumpf geworden sind. In diesem Falle muß dafür Sorge getragen werden, daß die Schneidwerkzeuge verstellt oder ausgewechselt und gegebenenfalls nachgeschliffen werden müssen.

## Patentansprüche

1. Vorrichtung zum Feststellen des Verschleißes an Schneidwerkzeugen unter Auswertung der am Schneidwerkzeug auftretenden Schwingungen, die in elektrische Signale umgewandelt werden, welche mittels einer Triggerschaltung zu einem bestimmten, vom Schneidvorgang abhängigen Zeitpunkt einer Auswerteschaltung zugeführt werden, die die Signalamplitude mit einem Sollwert vergleicht und bei Überschreiten des Sollwertes ein Steuersignal erzeugt, dadurch gekennzeichnet, daß bei Schneidwerkzeugen mit zwei sich aneinander vorbeibewegenden Schneiden die Triggerschaltung derart ausgebildet ist, daß die Schwingungen, die überwiegend nur Schallemissionssignale des Schneidvorganges enthalten, ausgewertet werden.

2. Vorrichtung nach Anspruch 1, dadurch gekennzeichnet, daß die Triggerschaltung durch ein externes Signal, z. B. in Abhängigkeit von der Bewegung des Schneidwerkzeuges (5, 6), auslösbar ist.

3. Vorrichtung nach Anspruch 1, dadurch gekennzeichnet, daß die Triggerschaltung durch den Beginn von Reibgeräuschen zwischen den Schneidwerkzeugteilen (5, 6) auslösbar ist.

## Claims

1. A device for determining the wear of cutting tools by analysing oscillations which occur on the cutting tool, which oscillations are converted into electrical signals and conducted via a trigger circuit at a specified time, dependent upon the cutting process, to an analysis circuit which compares the signal amplitude with a theoretical value and produces a control signal when the theoretical value is exceeded, characterised in that in the case of cutting tools having two cutting blades which move past one another, the trigger circuit is designed in such manner that only those oscillations which contain predominantly sound emission signals of the cutting process are analysed.

2. A device as claimed in Claim 1, characterised in that the trigger circuit can be triggered by an external signal, e. g. in dependence upon the movement of the cutting tool (5, 6).

3. A device as claimed in Claim 1, characterised in that the trigger circuit can be triggered by the commencement of frictional noises between the cutting tool components (5, 6).

## Revendications

1. Dispositif pour déterminer l'usure d'outils de coupe moyennant l'évaluation des vibrations apparaissant au niveau de l'outil de coupe et qui sont transformées sous la forme de signaux électriques qui sont envoyés au moyen d'un circuit de déclenchement, à un instant déterminé dépendant du processus de coupe, à un circuit d'évaluation qui compare l'amplitude des signaux à une valeur de consigne et produit un signal de commande lors du dépassement de la valeur de consigne, caractérisé par le fait que dans le cas d'outils de coupe comportant deux tranchants se déplaçant l'un devant l'autre, le circuit de déclenchement est agencé de telle sorte que les vibrations, qui contiennent principalement uniquement des signaux acoustiques d'émission du processus de coupe, sont évaluées.

2. Dispositif suivant la revendication 1, caractérisé par le fait que le circuit de déclenchement peut être déclenché par un signal extérieur, par exemple en fonction du déplacement de l'outil de coupe (5, 6).

3. Dispositif suivant la revendication 1, caractérisé par le fait que le circuit de déclenchement peut être déclenché par le début de bruits de frottement entre les éléments (5, 6) de l'outil de coupe.

# F I G 1

~500 µm

# F I G 3

FIG 2

FIG 6

0 045 942

# FIG 4

U

→ t

T.S.

390 µs

$t_0$   $t_1$

Rg

# FIG 5

U

→ t

T.S.

590 µs

$t_0$   $t_1$   Rg